## Europäisches Patentamt
## European Patent Office
## Office européen des brevets

(11) Veröffentlichungsnummer: **0 172 479**
**B1**

(12) ## EUROPÄISCHE PATENTSCHRIFT

(45) Veröffentlichungstag der Patentschrift :
28.09.88

(21) Anmeldenummer : 85109776.6

(22) Anmeldetag : 03.08.85

(51) Int. Cl.⁴ : **C 08 L 27/06, C 08 K 5/00, B 29 D 7/01// B29K27/06**
,(C08L27/06, 3:02)

(54) Folie mit matter und rauher Oberfläche auf der Basis von Vinylchloridpolymerisaten und Füllstoffen.

(30) Priorität : 14.08.84 DE 3429846

(43) Veröffentlichungstag der Anmeldung :
26.02.86 Patentblatt 86/09

(45) Bekanntmachung des Hinweises auf die Patenterteilung : 28.09.88 Patentblatt 88/39

(84) Benannte Vertragsstaaten :
AT BE CH DE FR GB IT LI NL

(56) Entgegenhaltungen :
DE-B- 2 716 853
CHEMICAL ABSTRACTS, Band 81, Nr. 12, 23. September 1974, Seite 41, Zusammenfassung Nr. 64534g, Columbus, Ohio, US; R.P. WESTHOFF et al.: "Starch-filled polyvinyl chloride plastics. Preparation and evaluation"

(73) Patentinhaber : HOECHST AKTIENGESELLSCHAFT
Postfach 80 03 20
D-6230 Frankfurt am Main 80 (DE)

(72) Erfinder : Mücke, Rainer, Dr.
Hoher Göllweg 14
D-8269 Burgkirchen (DE)
Erfinder : Schiller, Johann
Mittling 25 1/6
D-8262 Neuötting (DE)
Erfinder : Säckl, Herbert
Max-Halbe-Strasse 5
D-8621 Winhöring-Unterau (DE)

EP 0 172 479 B1

## Beschreibung

Die Erfindung betrifft eine Folie mit matter und rauher Oberfläche, die aus einem größeren Teil eines niedermolekularen Vinylchloridpolymerisates und einem kleineren Teil eines hochmolekularen Vinylchloridpolymerisates und einem Füllstoff sowie Gleitmittel und Wärmestabilisator besteht und nach dem Rollknet-Kalandrierverfahren hergestellt worden ist.

Eine derartige Folie mit Titandioxid als Füllstoff ist aus den beiden deutschen Offenlegungsschriften 18 15 891 und 27 16 853 bekannt. Diese Folie läßt nicht nur hinsichtlich Mattigkeit noch zu wünschen übrig, sie besitzt vor allem keine gute Kontakttransparenz, das heißt, daß eine durch die Folie hindurch betrachtete Abbildung, beispielsweise ein unter die Folie gelegtes Schriftbild, relativ trüb und damit nicht kontrastreich erscheint. Diese sogenannte innere Trübung besitzen auch jene Folien, die anstelle von Titandioxid andere derartige Füllstoffe enthalten, wie sie beispielsweise in der deutschen Offenlegungsschrift 28 44 687 empfohlen werden, nämlich Aluminiumoxid, Talkum und vorzugsweise Kreide. Bei Abwesenheit dieser Füllstoffe liegt zwar eine Folie mit guter Kontakttransparenz vor, sie ist jedoch noch weniger matt als die entsprechenden gefüllten Folien, was sich in ihrem relativ hohen Glanzwert zeigt.

Aus der deutschen Offenlegungsschrift 26 29 742 ist ferner bekannt, daß bei der Kalandrierung von Mischungen auf der Basis von Vinylchloridpolymerisaten nach dem Rollknet-Kalandrierverfahren eine Folie mit einer matten und rauhen Oberfläche erhalten wird, wenn die beiden letzten Kalanderwalzen mit einem Umfangsgeschwindigkeits-Verhältnis (Friktionswert) von 1,3 bis 20, vorzugsweise 1,6 bis 10, gefahren werden. Auch diese Folie weist die oben erwähnten Nachteile auf.

Es ist auch schon empfohlen worden, Stärke als Füllstoff bei Polyvinylchlorid-Folien zu verwenden, um dadurch die biologische Abbaubarkeit zu erhöhen (Ind. Eng. Chem., Prod. Res. Develop., Vol. 13, No. 2, 1974, 123 bis 125).

Die Aufgabe der Erfindung besteht darin, einen Füllstoff anzugeben, der bei Folien auf der Basis von Vinylchloridpolymerisaten mit relativ weit unterschiedlichen Molekulargewichten (Polymerisationsgraden, K-Werten) eine gute Mattigkeit und Rauhigkeit und gleichzeitig eine möglichst geringe innere Trübung hervorbringt. Die Aufgabe der Erfindung besteht demnach insbesondere darin, eine Folie der eingangs genannten Art zur Verfügung zu stellen, die sowohl eine hohe Mattigkeit und Rauhigkeit als auch eine hohe Kontakttransparenz aufweist.

Diese Aufgabe wird erfindungsgemäß gelöst durch eine Folie, die aus

a) 65 bis 97 Gew.-%, vorzugsweise 75 bis 93 Gew.-%, eines niedermolekularen Vinylchloridpolymerisates mit einem K-Wert von 50 bis 67,

b) 2 bis 30 Gew.-%, vorzugsweise 5 bis 15 Gew.-%, eines hochmolekularen Vinylchloridpolymerisates mit einem K-Wert von 70 bis 90 und

c) 1 bis 15 Gew.-%, vorzugsweise 2 bis 10 Gew.-%, Stärke als Füllstoff besteht, Gewichtsprozente bezogen auf die Gewichtssumme der drei Komponenten, die 100 Gewichtsprozente beträgt.

Das niedermolekulare Vinylchloridpolymerisat hat einen K-Wert von vorzugsweise 55 bis 60 und das hochmolekulare von vorzugsweise 75 bis 90. Der zweckmäßige Unterschied der K-Werte des hochmolekularen Vinylchloridpolymerisates und des niedermolekularen Vinylchloridpolymerisates ergibt sich einerseits insbesondere aus dem angestrebten Matteffekt, der mit steigenden K-Wert-Unterschieden ebenfalls ansteigt, und andererseits aus der gewünschten Kalandrierbarkeit, die mit steigenden K-Wert-Unterschieben abnimmt, das heißt, schwieriger wird. Demzufolge beträgt der Unterschied der K-Werte der Vinylchloridpolymerisate der Komponenten a) und b) im allgemeinen 3 bis 30 Einheiten, vorzugsweise 10 bis 25 Einheiten.

Eine erfindungsgemäß bevorzugte Folie besteht aus

a) 75 bis 93 Gew.-% eines niedermolekularen Vinylchloridpolymerisates mit einem K-Wert von 50 bis 67, vorzugsweise 55 bis 60,

b) 5 bis 15 Gew.-% eines hochmolekularen Vinylchloridpolymerisates mit einem K-Wert von 70 bis 90, vorzugsweise 75 bis 90, und

c) 2 bis 10 Gew.-% Stärke.

Als Vinylchloridpolymerisate können Vinylchlorid-Homo- oder Vinylchlorid-Copolymerisate eingesetzt werden, die nach einem der üblichen Polymerisationsverfahren, nämlich nach der Emulsionspolymerisation, Suspensionspolymerisation oder Massepolymerisation, vorzugsweise nach der Suspensions- oder Massepolymerisation, hergestellt worden sind. Der Anteil der Comonomeren in den Copolymerisaten beträgt im allgemeinen höchstens 20 Gew.-%, vorzugsweise 1 bis 10 Gew.-%, Gewichtsprozente bezogen auf das Copolymerisat. Geeignete Copolymerisate sind solche aus Vinylchlorid/Vinylacetat, Vinylchlorid/Ethylen/Vinylacetat, Vinylchlorid/Maleinimid und Vinylchlorid/Acrylat oder Methacrylat, vorzugsweise mit bis zu 5 C-Atomen im veresterten Alkoholrest. Die Vinylchlorid-Homopolymerisate sind bevorzugt.

Der K-Wert des Vinylchloridpolymerisates (der dem mittleren Polymerisationsgrad oder dem mittleren Molekulargewicht entspricht) wird bekanntlich durch Einhaltung einer entsprechenden Temperatur während der Polymerisation und/oder durch die Zugabe von Reglern eingestellt. Der K-Wert eines Vinylchloridpolymerisates wird nach DIN 53 726 bestimmt, das ist mit Cyclohexanon als Lösungsmittel (K-Werte nach H. Fikentscher). Die erfindungsgemäß einzusetzenden Vinylchloridpolymerisate sind in

2

diesem Lösungsmittel löslich.

Als Stärke können natürliche oder synthetische (vernetzte) pulverförmige Stärkeprodukte eingesetzt werden. Geeignete Stärken sind : Getreidestärken wie Roggen-, Weizen-, Hafer- oder Gerstestärke, Maisstärke, Reisstärke und Kartoffelstärke. Das Stärkepulver besteht im allgemeinen aus einfachen oder zusammengesetzten, verschieden geformten (eiförmigen, linsenförmigen, rundlichen oder vieleckigen) Teilchen. Der Teilchendurchmesser (die Teilchengröße) der erfindungsgemäß einzusetzenden Stärke kann innerhalb weiter Grenzen variieren. Bevorzugt ist eine Stärke mit einem mittleren Teilchendurchmesser von 0,004 bis 0,15 mm. Zweckmäßigerweise wird ein solches Stärkepulver eingesetzt, dessen Teilchendurchmesser unterhalb der Dicke der angestrebten Folie liegt.

Als Wärmestabilisatoren werden vorzugsweise die für Vinylchloridpolymerisate üblichen Organozinnschwefelverbindungen, Aminocrotonsäureester, Harnstoff- und Thioharnstoffderivate und/oder Salze der Erdalkalimetalle und des Zinks eingesetzt. Bevorzugt sind die Organozinnschwefel-Stabilisatoren wie Dimethylzinn-, Dibutylzinn- und Dioctylzinn-bis-2-ethyl-hexylthioglykolat. Die wirksame Menge an Stabilisator beträgt üblicherweise 0,5 bis 3 Gew.-%, vorzugsweise 1 bis 2 Gew.-%, bezogen auf die Gewichtsmenge an Vinylchloridpolymerisat.

Als Gleitmittel werden vorzugsweise die folgenden, für Vinylchloridpolymerisate üblichen Verbindungen eingesetzt : Stearinsäure, Montansäure, Glycerinester wie Glycerinmonooleat, bis-Palmitoylethylendiamin, bis-Stearoylethylendiamin, Montansäureester von Ethandiol oder 1,3-Butandiol, gegebenenfalls teilweise verseift. Die wirksame Menge an Gleitmittel beträgt üblicherweise 0,1 bis 2,5 Gew.-%, vorzugsweise 0,5 bis 1,5 Gew.-%, bezogen auf die Gewichtsmenge an Vinylchloridpolymerisat.

Im Falle, daß die erfindungsgemäße Folie beispielsweise auf erhöhte Schlagzähigkeit, auf eine bestimmte Farbe, antistatisch und/oder nicht-brennbar eingestellt werden soll, kann sie entsprechende Zusätze in einer jeweils wirksamen Menge enthalten. Geeignete Schlagzähigkeitsmodifikatoren sind die bei Polyvinylchlorid üblichen Polymerisate aus Acrylnitril/Butadien/Styrol, Methylmethacrylat/Acrylnitril/Butadien/Styrol, Methylmethacrylat/Butadien/Styrol, Methylmethacrylat und chloriertem Polyethylen. Die Einfärbung auf beispielsweise Rot, Grün und dergleichen, erfolgt mit Hilfe entsprechender Farbstoffe. Die Einfärbung auf Weiß erfolgt vorzugsweise mit Hilfe von Titandioxid und/oder Kreide. Bevorzugte Antistatikmittel sind die für Polyvinylchlorid-Folien üblichen quaternären Ammoniumsalze. Antimontrioxid ist ein für Polyvinylchlorid besonders geeignetes Flammschutzmittel.

Die Bereitung der Mischungen, von denen bei der Herstellung der erfindungsgemäßen Folie ausgegangen wird, erfolgt durch Zusammenmischen der einzelnen Komponenten, was zweckmäßigerweise in einem in der Kunststoff-Verarbeitung üblichen Mischer durchgeführt wird.

Die erfindungsgemäße Folie wird nach dem Rollknet-Kalandrierverfahren hergestellt, das auch Hochtemperatur-Kalandrierverfahren genannt wird. Bei diesem Kalandrierverfahren wird bekanntlich die bereitete Vinylchloridpolymerisat-Mischung zunächst vorplastifiziert. Die vorplastifizierte Masse wird dann auf einem aus mindestens drei, vorzugsweise drei bis sechs, insbesondere vier bis fünf Walzen bestehenden Kalander zu einer Folie ausgewalzt, wobei vor den Walzenspalten ein rotierender Masseknet gebildet wird. Dieser Rollknet besteht aus überschüssigem thermoplastischem Material, das im Zustand thermischer Plastizität ist und in Kontakt mit je zwei heißen Walzen vor den Walzenspalten rotiert. Die Drehung der einzelnen Kalanderwalzen ist im allgemeinen so eingestellt, daß die Umfangsgeschwindigkeit von Walze zu Walze in Material-Laufrichtung zunimmt und die Friktion (das ist das Verhältnis der Umfangsgeschwindigkeit zweier benachbarter Walzen) im ersten Spalt etwa 1,05 bis 1,2 beträgt, und die Friktionen in den nachfolgenden Spalten etwa 1,05 bis 1,15 betragen. Beim Rollknet- oder Hochtemperatur-Kalandrierverfahren werden die Kalanderwalzen auf relativ hohe Temperaturen geheizt (im Gegensatz zum Niedertemperatur-Kalandrierverfahren, auch Luvitherm-Verfahren genannt). Im Falle der Kalandrierung von Mischungen auf der Basis von Vinylchloridpolymerisaten sind die Kalanderwalzen im allgemeinen auf 160 bis 230 °C, vorzugsweise auf 170 bis 210 °C, erhitzt. Die der letzten Kalanderwalze (in Material-Laufrichtung) vorangehenden Walzen besitzen im allgemeinen eine von Walze zu Walze steigende oder eine im wesentlichen gleiche Temperatur, oder sie sind so erhitzt, daß die erste Walze eine höhere Temperatur hat als die folgenden, die ihrerseits eine steigende oder eine im wesentlichen gleiche Temperatur besitzen. Die letzte Kalanderwalze hat im allgemeinen eine niedrigere Temperatur als zumindest die vorhergehende Walze. Mit Hilfe des Temperaturprogrammes und/oder mit Hilfe der Friktion ist das Übergehen des Walzfelles (der Folienbahn) von einer Kalanderwalze zur anderen gewährleistet. Die kalandrierte Folie wird von der letzten Kalanderwalze abgenommen und nach Abkühlung aufgewickelt.

Bei der Herstellung der erfindungsgemäßen Folie nach dem Rollknet-Kalandrierverfahren hat es sich als vorteilhaft erwiesen, die Friktion im letzten Walzenspalt auf einen — im Vergleich zu dem bei der Polyvinylchlorid-Kalandrierung allgemein üblichen — wesentlich höheren Wert einzustellen, und zwar auf 1,2 bis 1,6, vorzugsweise 1,3 bis 1,4. Was die Temperatur der Kalanderwalzen anbelangt, so liegt diese in dem bei der Rollknet-Kalandrierung von Polyvinylchlorid üblichen Temperaturbereich. Die Herstellung der erfindungsgemäßen Folie nach dem Rollknet-Kalandrierverfahren auf einem beispielsweise aus vier Walzen bestehenden Kalander, erfolgt demnach bei einer Kalanderwalzen-Temperatur von 160 bis 230 °C, vorzugsweise 170 bis 210 °C, und einer Friktion des in Material-Laufrichtung letzten Walzenpaares von 1,2 bis 1,6, vorzugsweise 1,3 bis 1,4. Dabei sind die einzelnen Walzen vorzugsweise derart erhitzt, daß die Temperatur der ersten beiden Walzen (Material-Laufrichtung) 170 bis 200 °C beträgt, die Temperatur der dritten Walze 200 bis 210 °C und die Temperatur der vierten Walze 180 bis 190 °C beträgt. Die kalandrierte Folie wird von der letzten Kalanderwalze abgezogen, mit Hilfe von Kühlwalzen gekühlt und aufgewickelt.

Die Dicke der erfindungsgemäßen Folie beträgt im allgemeinen 0,1 bis 1 mm, vorzugsweise 0,2 bis 0,7 mm.

Die Erfindung wird nun anhand von Beispielen noch näher erläutert :

Die in den nachstehenden Beispielen angeführten Komponenten sowie ein Gleitmittel und ein Wärmestabilisator für Polyvinylchlorid wurden in einem in der Kunststoffverarbeitung üblichen Schnellmischer gemischt. Die Mischung wurde auf einem Mischwalzwerk bei einer Temperatur von 160 bis 180 °C vorgeliert. Aus der vorgelierten Masse wurde auf einem Kalander mit vier Walzen unter Bildung eines Rollknetes vor jedem Walzenspalt eine Folie kalandriert, wobei die beiden ersten Walzen (in Materialaufrichtung) auf 190 bis 200 °C, die dritte Walze auf 200 bis 210 °C und die vierte Walze auf 180 bis 190 °C erhitzt waren und die Friktion im letzten Walzenspalt auf 1,3 eingestellt war. Die kalandrierte Folie wurde von der letzten Kalanderwalze abgezogen, mit Hilfe von Kühlwalzen gekühlt und aufgewickelt. Die Dicke der erhaltenen Folie betrug jeweils 0,2 mm.

An den Folien wurden die folgenden Eigenschaften geprüft :

1. Die Oberflächenrauhigkeit nach DIN 4768, wobei die gemittelte Rauhtiefe $R_z$ bestimmt wurde ;
2. der Glanz nach DIN 67 530, bei einem Meßwinkel von 85° (Glanzwert) ;
3. die Kontakttransparenz nach ASTM 1003, wobei ein Folienstück in eine mit Tetralin gefüllte Küvette eingebracht wird und diese Küvette (mit dem Tetralin und dem Folienstück) die Meßprobe für die Messung der Trübung nach ASTM 1003 ist. Durch das Eintauchen des zu testenden Folienstückes in Tetralin wird erreicht, daß nur die vom Inneren des Folienstückes ausgehende Trübung (Materialtrübung, innere Trübung) gemessen wird, da Folienoberflächeneffekte wie Oberflächenmattigkeit wegen des gleichen Brechungsindexes von Tetralin und Folienstück ausgeschaltet sind (Tetralin hat bekanntlich den gleichen Brechungsindex wie eine Polyvinylchlorid-Folie).

Die erhaltenen Werte sind in der folgenden Tabelle zusammengefaßt :

Wie die Beispiele und Vergleichsbeispiele zeigen, besitzen die erfindungsgemäßen Folien überraschend gute Werte hinsichtlich Rauhigkeit (hohe $R_z$-Werte), Mattigkeit (kleine Glanzwerte) und Kontakttransparenz (kleine Werte hinsichtlich innerer Trübung). Die erfindungsgemäßen Folien sind gut bedruckbar oder beschriftbar und können für derartige Zwecke eingesetzt werden. Sie können ferner als Möbelfolie, Deckenkassetten-Folie, Kreditkarten-Folie und zur Herstellung von Büroartikeln wie Aktenhüllen eingesetzt werden.

## Beispiel 1

78 Gew.-% Masse-Polyvinylchlorid, K-Wert 54,
10 Gew.-% Masse-Polyvinylchlorid, K-Wert 75,
12 Gew.-% Stärke.

## Beispiel 2

75 Gew.-% Masse-Polyvinylchlorid, K-Wert 57,
15 Gew.-% Masse-Polyvinylchlorid, K-Wert 80,
10 Gew.-% Stärke.

## Beispiel 3

70 Gew.-% Suspensionspolyvinylchlorid, K-Wert 60,
25 Gew.-% Suspensionspolyvinylchlorid, K-Wert 70,
 5 Gew.-% Stärke.

## Beispiel 4

93 Gew.-% Suspensionspolyvinylchlorid, K-Wert 65,
 5 Gew.-% Suspensionspolyvinylchlorid, K-Wert 90,
 2 Gew.-% Stärke.

## Beispiel 5 (Vergleichsbeispiel analog DE-OS 27 16 853)

85 Gew.-% Masse-Polyvinylchlorid, K-Wert 57,
15 Gew.-% Masse-Polyvinylchlorid, K-Wert 80.

## Beispiel 6 (Vergleichsbeispiel)

75 Gew.-% Masse-Polyvinylchlorid, K-Wert 57,

**0 172 479**

15 Gew.-% Masse-Polyvinylchlorid, K-Wert 80,
10 Gew.-% Kreide.

Beispiel 7 (Vergleichsbeispiel)

83 Gew.-% Masse-Polyvinylchlorid, K-Wert 57,
15 Gew.-% Masse-Polyvinylchlorid, K-Wert 80,
2 Gew.-% Kreide.

Beispiel 8 (Vergleichsbeispiel analog DE-OS 18 15 891)

80 Gew.-% Masse-Polyvinylchlorid, K-Wert 57,
15 Gew.-% Masse-Polyvinylchlorid, K-Wert 80,
5 Gew.-% Titandioxid.

Tabelle

| Beispiel (VB=Vergleichsbeispiel) | Oberflächenrauhigkeit (μm) | Glanzwert (%) | Kontakttransparenz (%) |
|---|---|---|---|
| 1 | 41 | 1 | 15 |
| 2 | 35 | 3 | 11 |
| 3 | 20 | 5 | 7 |
| 4 | 19 | 5 | 3 |
| 5 VB | 10 | 17 | 2 |
| 6 VB | 30 | 8 | 93 |
| 7 VB | 20 | 12 | 52 |
| 8 VB | 16 | 15 | 100 |

**Patentansprüche**

1. Folie mit matter und rauher Oberfläche, die aus einem größeren Teil eines niedermolekularen Vinylchloridpolymerisates und einem kleineren Teil eines hochmolekularen Vinylchloridpolymerisates und einem Füllstoff sowie Gleitmittel und Wärmestabilisator besteht und nach dem Rollknet-Kalandrierverfahren hergestellt worden ist, dadurch gekennzeichnet, daß die Folie aus

a) 65 bis 97 Gew.-% eines niedermolekularen Vinylchloridpolymerisates mit einem K-Wert von 50 bis 67,

b) 2 bis 30 Gew.-% eines hochmolekularen Vinylchloridpolymerisates mit einem K-Wert von 70 bis 90 und

c) 1 bis 15 Gew.-% Stärke als Füllstoff besteht, Gewichtsprozente bezogen auf die Gewichtssumme der drei Komponenten.

2. Folie nach Anspruch 1, dadurch gekennzeichnet, daß das niedermolekulare Vinylchloridpolymerisat einen K-Wert von 55 bis 60 und das hochmolekulare Vinylchloridpolymerisat einen K-Wert von 75 bis 90 besitzt.

3. Folie nach Anspruch 1, dadurch gekennzeichnet, daß sie aus

a) 75 bis 93 Gew.-% eines niedermolekularen Vinylchloridpolymerisates mit einem K-Wert von 55 bis 60,

b) 5 bis 15 Gew.-% eines hochmolekularen Vinylchloridpolymerisates mit einem K-Wert von 75 bis 90, und

c) 2 bis 10 Gew.-% Stärke
besteht.

4. Folie nach Anspruch 1, dadurch gekennzeichnet, daß die Kalanderwalzen auf eine Temperatur von 170 bis 210 °C erhitzt sind.

5. Folie nach Anspruch 1, dadurch gekennzeichnet, daß die Friktion im letzten Walzenspalt auf 1,3 bis 1,4 eingestellt ist.

5

6. Folie nach Anspruch 1, dadurch gekennzeichnet, daß sie aus

a) 75 bis 93 Gew.-% eines niedermolekularen Vinylchloridpolymerisates mit einem K-Wert von 55 bis 60,

b) 5 bis 15 Gew.-% eines hochmolekularen Vinylchloridpolymerisates mit einem K-Wert von 75 bis 90, und

c) 2 bis 10 Gew.-% Stärke,

besteht und nach dem Rollknet-Kalandrierverfahren hergestellt worden ist, bei dem die Kalanderwalzen auf eine Temperatur von 170 bis 210 °C erhitzt sind und die Friktion im letzten Walzenspalt auf 1,3 bis 1,4 eingestellt ist.

**Claims**

1. A film with a matt and rough surface, which consists of a major proportion of a low molecular vinyl chloride polymer and a minor proportion of a high molecular vinyl chloride polymer and a filler, as well as lubricants and a heat stabilizer, and which has been produced by the roll kneading/calendering process, which film consists of

a) 65 to 97 % by weight of a low molecular vinyl chloride polymer having a K value of 50 to 67,

b) 2 to 30 % by weight of a high molecular vinyl chloride polymer having a K value of 70 to 90 and

c) 1 to 15 % by weight of starch as a filler, the percentages by weight being based on the sum of the weights of the three components.

2. A film as claimed in claim 1, wherein the low molecular vinyl chloride polymer has a K value of 55 to 60 and the high molecular vinyl chloride polymer has a K value of 75 to 90.

3. A film as claimed in claim 1, which consists of

a) 75 to 93 % by weight of a low molecular vinyl chloride polymer having a K value of 55 to 60,

b) 5 to 15 % by weight of a high molecular vinyl chloride polymer having a K value of 75 to 90 and

c) 2 to 10 % by weight of starch.

4. A film as claimed in claim 1, in the production of which the calender rolls are heated to a temperature of 170 to 210 °C.

5. A film as claimed in claim 1, in the production of which the friction in the last nip is set to 1.3-1.4.

6. A film as claimed in claim 1, which consists of

a) 75 to 93 % by weight of a low molecular vinyl chloride polymer having a K value of 55 to 60,

b) 5 to 15 % by weight of a high molecular vinyl chloride polymer having a K value of 75 to 90 and

c) 2 to 10 % by weight of starch,

and which has been produced by the roll kneading/calendering process, with the calender rolls being heated to a temperature of 170 to 210 °C and the friction in the last nip being set to 1.3-1.4.

**Revendications**

1. Feuille à surface mate et rugueuse, qui est constituée d'une assez grande proportion d'un polymère du chlorure de vinyle à bas poids moléculaire et d'une proportion plus faible d'un polymère du chlorure de vinyle à haut poids moléculaire, d'une charge, d'un lubrifiant et d'un stabilisant à la chaleur et qui a été fabriquée par le procédé de calandrage à zone malaxée en rotation, feuille caractérisée en ce qu'elle est constituée :

a) de 65 à 97 % en poids d'un polymère du chlorure de vinyle à bas poids moléculaire dont la valeur K est comprise entre 50 et 67,

b) de 2 à 30 % en poids d'un polymère du chlorure de vinyle à haut poids moléculaire dont la valeur K est comprise entre 70 et 90 et

c) de 1 à 15 % en poids d'amidon comme charge, les pourcentages indiqués étant rapportés à la somme des poids des trois composantes.

2. Feuille selon la revendication 1, caractérisée en ce que le polymère du chlorure de vinyle à bas poids moléculaire a une valeur K comprise entre 55 et 60 et le polymère du chlorure de vinyle à haut poids moléculaire a une valeur K comprise entre 75 et 90.

3. Feuille selon la revendication 1, caractérisée en ce qu'elle est constituée :

a) de 75 à 93 % en poids d'un polymère du chlorure de vinyle à bas poids moléculaire dont la valeur K est comprise entre 55 et 60,

b) de 5 à 15 % en poids d'un polymère du chlorure de vinyle à haut poids moléculaire dont la valeur K est comprise entre 75 et 90, et

c) de 2 à 10 % en poids d'amidon.

4. Feuille selon la revendication 1, caractérisée en ce que les cylindres de la calandre sont chauffés à une température de 170 à 210 °C.

5. Feuille selon la revendication 1, caractérisée en ce que la friction dans le dernier espace entre cylindres est ajustée à une valeur comprise entre 1,3 et 1,4.

6. Feuille selon la revendication 1, caractérisée en ce qu'elle est constituée :

a) de 75 à 93 % en poids d'un polymère du chlorure de vinyle à bas poids moléculaire dont la valeur K est comprise entre 55 et 60,

b) de 5 à 15 % en poids d'un polymère du chlorure de vinyle à haut poids moléculaire dont la valeur K est comprise entre 75 et 90, et

c) de 2 à 10 % en poids d'amidon,

et en ce qu'elle a été fabriquée par le procédé de calandrage à zone de malaxage en rotation avec les cylindres de la calandre chauffés à une température de 170 à 210 °C et avec une friction, dans le dernier espace entre cylindres, réglée à une valeur comprise entre 1,3 et 1,4.